# EUROPEAN PATENT SPECIFICATION

(11) **EP 3 210 116 B1**
(45) Date of publication and mention of the grant of the patent: **24.06.2020**
(21) Application number: 15725271.9
(22) Date of filing: 15.05.2015
(51) Int. Cl.: G06F 9/54, H04L 12/863, H04W 4/00, H04W 88/16, H04L 12/803, H04W 4/60

(54) **QUEUE HANDLING**
HANDHABUNG VON WARTESCHLANGEN
GESTION DE FILE D'ATTENTE

(43) Date of publication of application: 30.08.2017
(73) Proprietor: Huawei Technologies Co., Ltd., Longgang District Shenzhen, Guangdong 518129 (CN)
(72) Inventor: LOWE, Christopher, Kevan, Bantian, Longgang District, Shenzhen, Guangdong 518129 (CN); WENHAM, Steven, James, Bantian, Longgang District, Shenzhen, Guangdong 218129 (CN); BUSH, James, Bantian, Longgang District Shenzhen, Guangdong 518129 (CN)
(74) Representative: Gill Jennings & Every LLP
(86) International application number: PCT/EP2015/060804
(87) International publication number: WO 2016/184486

(56) References cited:
- LINDE H ET AL: "Sensor and actuator networks - A service gateway for networked sensor systems", IEEE PERVASIVE COMPUTING, IEEE SERVICE CENTER, LOS ALAMITOS, CA, US, vol. 3, no. 1, 1 January 2004 (2004-01-01) , pages 66-74, XP011108157, ISSN: 1536-1268
- LUIS GARCÉS-ERICE ET AL: "A flexible and scalable message broker for sensor network integration", PROCEEDINGS OF THE FOURTH INTERNATIONAL ICST CONFERENCE ON COMMUNICATION SYSTEM SOFTWARE AND MIDDLEWARE, COMSWARE '09, 1 January 2009 (2009-01-01), page 1, XP055236137, New York, New York, USA DOI: 10.1145/1621890.1621896 ISBN: 978-1-60558-353-2
- JIAN FENG ET AL: "An optimum gateway discovery and selection mechanism in WSN and mobile cellular network integration", 2013 8TH INTERNATIONAL CONFERENCE ON COMMUNICATIONS AND NETWORKING IN CHINA (CHINACOM), IEEE, 14 August 2013 (2013-08-14), pages 483-487, XP032546784, DOI: 10.1109/CHINACOM.2013.6694644 [retrieved on 2013-12-24]

## Description

### TECHNICAL FIELD

This invention relates to methods and apparatus for transferring data between different parts of a network.

### BACKGROUND

A machine-to-machine (M2M) network typically has many base stations. Each base station may be capable of bearing traffic from potentially thousands of devices and on behalf of potentially thousands of customers.

Base stations may pass the messages they receive to a core network for further processing and/or reporting to customers. Base stations may access the core network via message queues. One option would be to have a single message queue to which all of the base stations subscribe. However, a single message queue risks becoming a bottleneck. Another option would be to have multiple message queues. In this arrangement the base stations would need to know which message queues to attach to. One solution might be for each message queue to serve a selection of the base stations based on some pre-determined load balancing algorithm. If this algorithm were also loaded into the base station, the base stations would be able to determine what message queue to join, by applying this algorithm to the current load situation. Such an arrangement would lack flexibility when the base station's message queue fails and would complicate the manner in which the network grows.

There is a need for mechanism of handling message queues between the base stations and a core network that can be straightforwardly scaled to accommodate large numbers of devices. There is also a need for a mechanism that is resilient and allows for the failure of individual message queues.

Luis Garces-Erice et al. published a paper titled, "A flexible and scalable message broker for sensor network integration" on 1 January 2009 which discusses design and implementation of a message broker. LUIS GARCES-ERICE ET AL: "A flexible and scalable message broker for sensor network integration", 2009-01-01 XP055236137 discloses a scalable message broker for message-oriented middleware and sensor protocols integrated into the broker for end-to-end interaction with external enterprise applications. JIAN FENG ET AL: "An optimum gateway discovery and selection mechanism in WSN and mobile cellular network integration", 2013-08-14 XP032546784 discloses a gateway selection mechanism for a wireless sensor network and mobile cellular network.

### SUMMARY OF THE INVENTION

It is the object of the invention to provide methods and apparatus for transferring data between different parts of a network.

This object is achieved by the features of the independent claims. Further implementation forms are apparent from the dependent claims, the description and the figures.

According to a first aspect the invention relates to a queue assigner for assigning a client device, in particular a base station , to message queues for exchanging communication data between the client device and a communication network via a plurality of gateways, wherein a gateway can in particular comprise or be a concentrator, each gateway being associated with at least one message queue for transferring the communication data, the queue assigner comprising: a processor being configured for assigning the client device to a currently existing message queue associated with at least one gateway selected from the plurality of gateways, the processor can be further configured for determining that a new message queue is required if the client device cannot be assigned to the existing message queue, and the processor causes the creation of the new message queue, in particular responsive to that determination, or if the client device cannot be assigned to the existing message queue, wherein the processor is configured to assign the client device to the new message queue for transmitting communication data. The new message queue then forming a new existing message queue.

The processor is configured for assigning the client device to the respective existing message queue according to a communication parameter, relating to the gateway, to the client device, and/or to the communication network. The processor is configured for validating the identity of the client device (203) before assigning the client device (203) to the existing message queue (207-1).

In a possible implementation form, the processor is configured for assigning the client device to the respective existing message queue responsive to a request from that client device.

In a possible implementation form, the processor is configured for storing the communication parameter and, in the future, assigning the client device to a queue in dependence on the stored communication parameter.

In a possible implementation form, the processor is configured for assigning the client device to an existing message queue associated with a gateway that already has a connection with that entity.

In a possible implementation form, the processor is configured for assigning the client device to an existing message queue associated with a gateway that previously had a connection with the client device.

In a possible implementation form, the processor is configured for assigning a client device to the respective existing message queue in order to improve a cache hit rate of the gateway that is associated with the respective existing message queue.

In a possible implementation form, the processor is configured for assigning the client device to the respective existing message queue in dependence on a location associated with the client device.

In a possible implementation form, the processor is configured for assigning the client device to an existing message queue associated with a gateway that is already assigned to another client device located in a similar geographical location as the client device.

In a possible implementation form, the processor is configured for assigning the client device to more than one respective existing message queue.

In a possible implementation form, the processor is configured for assigning the client device to one respective existing message queue for upstream messages and another respective existing message queue for downstream messages.

In a possible implementation form, the processor is configured for providing the client device information to identify and/or join the respective existing message queue.

In a possible implementation form, the processor is configured for providing the client device with information that includes one or more of: the address of the gateway with which the assigned queue is associated; an identity of the assigned respective existing message queue; security credentials to enable the client device to authenticate itself with the gateway; a protocol the client device should use in communicating with the gateway; a message format for the client device to use in communicating with the gateway; one or more properties that a message sent by the client device to the gateway should have; and parameters for subscribing to the assigned respective existing message queue.

In a possible implementation form, the processor is configured for generating or creating the new message queue in response to a request from the client device, or in response to the processor assigning the respective existing message queue to a client device, or in dependence of a load of one, a plurality, or all existing message queues.

In a possible implementation form, the processor is configured for generating a new message queue at an input port of a gateway.

In a possible implementation form, the processor is configured for treating each input port of a gateway as a potential existing message queue.

In a possible implementation form, the processor is configured for generating a new message queue by causing a new gateway to be generated.

In a possible implementation form, the processor is configured for monitoring a load of one, a pluarality, or all of the respective existing message queues associated with the plurality of gateways.

The load of a message queue can for instance correspond to the data rate of the message queue.

In a possible implementation form, the processor is configured for causing a new message queue to be generated in dependence of the load that is associated with the existing message queues.

In a possible implementation form, the processor is configured for validating the identity of the client device before assigning the client device to the respective existing message queue.

In a possible implementation form, the processor being configured for reassigning the client device, in particular which was determined, in particular by the processor, to have lost its connection with a gateway without losing its own state, to a respective existing message queue associated with a different gateway.

In a possible implementation form, the processor is configured for instructing the different gateway to treat the client device as knowing its own state.

In a possible implementation form, the processor is configured for, in particular if it determines that a client device has suffered a loss of state, retrieving a state associated with the client device from a support system in the communication network, for instance an OSS.

In a possible implementation form, the processor is configured for, in particular if it determines that a client device has suffered a loss of state, assigning that client device to a respective existing message queue at the gateway to which the client device was allocated prior to its loss of state.

According to a second aspect, the invention relates to a method for assigning a client device to message queues for exchanging communication data between the client device and a communication network via at a plurality of gateways, each gateway being associated with at least one message queue for transferring the communication data, the method comprising: assigning the client device to an currently existing message queue associated with at least one gateway of the plurality of gateways, in particular determining that a new message queue is required if the client device cannot be assigned to the existing message queue, generating the new message queue, in particular responsive to that determination, if the client device cannot be assigned to the existing message queue, and assigning the client device to the new message queue for transmitting communication data. The new message queue forming a new existing message queue, wherein the assigning the client device (203) to the existing message queue (207-1) is performed according to a communication parameter relating to the gateway, to the client device (203), and/or to the communication network (201), the method further comprising validating the identity of the client device (203) before assigning the client device (203) to the existing message queue (207-1).

According to a third aspect, the invention relates to a gateway entity for managing communications between at least one client device and a communication network, the gateway entity comprising: a processor being configured for establishing a first secure connection between the gateway entity and the at least one client device and a second secure connection between the gateway entity and an entity in the communication network; and a communication interface being configured for receiving data from the at least one client device via the first secure connection; and being configured for transmitting that data via the second secure connection to an entity in the communication network; wherein the communication interface comprises at least one port for receiving data from the at least one client device.

In a possible implementation form, the processor being configured for establishing secure connections with multiple different service providers on behalf of the client device.

In a possible implementation form, the gateway entity comprises a memory, in particular a cache, configured for storing the addresses of the entities in the communication network to which the client devices were previously transmitting data via the gateway entity, or for storing a record of the data that is communicated between the gateway entity and the client device.

In a possible implementation form, in association with each address of an entity in the communication network, the identity of a terminal on behalf of which the client device transmitted the data to the entity in the communication network.

In a possible implementation form, the memory is configured for storing a record of the data that is communicated between the gateway entity and the client device, and the communication interface configured for transferring the record to the client device if the client device suffers a loss of state.

In a possible implementation form, the gateway entity is configured for, if it determines that it is overloaded, instructing one or more client devices to change to another gateway entity.

In a possible implementation form, the gateway entity is configured for: receiving information from other gateway entities about their capabilities; and in dependence on that information, determining whether to instruct one or more client devices to change to a respective exiting message queue operated by another gateway entity.

In a possible implementation form, the gateway entity is configured for instructing the client device to change the queue in dependence on a load of the gateway entity relative to the load of the other gateway entity.

According to a fourth aspect, the invention relates to a communication unit for communicating over a wireless network, the communication unit comprising: a communication interface being configured for receiving data over the wireless network and transferring the data to a gateway between the wireless network and a communication network; and a processor being configured for requesting from the gateway a record of the data that the communication unit has previously communicated with the gateway, in the event of the communication unit suffering a loss of state, and use that record to assist in recovering the state of the communication unit.

In a possible implementation form, in the event of the communication unit suffering a loss of state, causing the processor to contact an entity in the communication network and informing it that the communication unit has suffered a loss of state.

In a possible implementation form, the processor is configured for using a record of its state received from an entity in the communication network to assist in recovering the state of the communication unit.

According to a fifth aspect, the invention relates to a communication method for routing data between a client device and a communication network comprising: establishing a secure connection between the client device and a gateway entity; establishing a secure connection between the gateway entity and an entity in the communication network with which the client device wants to communicate data; and routing data received over the secure connection between the client device and the gateway entity that is intended for the entity in the communication network over the secure connection between the gateway entity and the entity in the communication network.

According to a sixth aspect, the invention relates to a communication method re-establishing the state of a client device that has previously communicated with a gateway entity acting as a gateway between the client device and a communication network, the method comprising: the gateway entity providing the client device a record of the data that the client device has previously communicated with the gateway entity; and the client device using that record to assist in recovering the state of the client device.

According to a seventh aspect, the invention relates to a communication method for re-establishing the state of a gateway entity acting a gateway between the client device and a communication network, the method comprising: the gateway entity retrieving a record of the data that the gateway entity has previously communicated with one or more client devices; and the gateway entity using that record to assist in recovering the state of the gateway entity.

### BRIEF DESCRIPTION OF THE DRAWINGS

Figure 1 shows an example of a queue assigner;
Figures 2a and b show an example of a communication network;
Figure 3 shows an example of a method for assigning queues;
Figure 4 shows an example of a method for creating queues;
Figure 5 shows an example of a gateway entity;
Figure 6 shows an example of a method for establishing connections;
Figure 7 shows an example of re-establishing a state in a client device;
Figure 8 shows an example of re-establishing a state in a gateway entity; and
Figure 9 shows an example of a communication unit.

### DETAILED DESCRIPTION OF EMBODIMENTS OF THE INVENTION

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

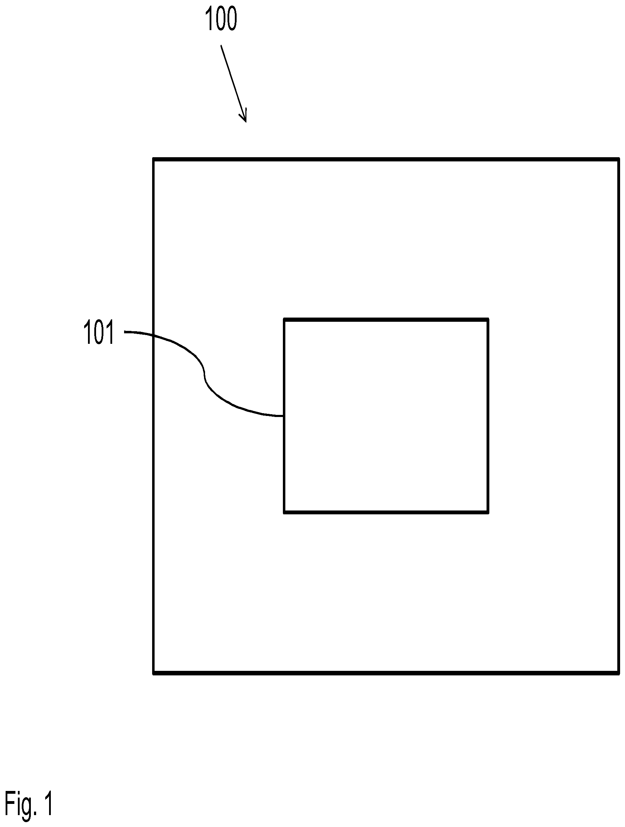

Figure 1 shows an example of a queue assigner 100 for acting as an intermediary between a client device 203 and a plurality of gateways. Each gateway is associated with one or more message queues 207-1, which provide a means for data to be exchanged between the client device and a communication network or entities in the communication network. According to an embodiment the communication network is a service network and the entities in the communication network are service providers. The queue assigner 100 is a single network entity configured to handle both the management and assignment of message queues 207-1 and the scaling of message queues 207-1 to the number of devices in the network and/or current traffic levels.

The queue assigner 100 comprises a processor 101, which is configured to assign a client device to a message queue 207-1 associated with one of the plurality of gateways and to determine that a new message queue 207-1 is required and cause a new message queue 207-1 to be created responsive to that determination. According to an embodiment the processor 101 comprises a queue manager for assigning the client device to the message queue 207-1, and a queue generator for determining that a new message queue 207-1 is required and causing the creation responsive to that determination. According to an embodiment the processor 101 also comprises a security unit and an optional monitoring unit. The security unit is configured to validate a client device's identity before assigning it to a message queue 207-1. The monitoring unit is configured to monitor a load that is associated with the message queues 207-1 of the plurality of gateways.

The structures shown in Figure 1 (and block apparatus diagrams included herein) are intended to correspond to a number of functional blocks in an apparatus. This is for illustrative purposes only. Figure 1 is not intended to define a strict division between different parts of hardware on a chip or between different programs, procedures or functions in software. In some embodiments, some or all of the algorithms described herein may be performed wholly or partly in hardware. The processor 101 may in some implementations form part of a distributed computing network (i.e. it may be implemented on rented servers provided by a cloud services provider). It may be implemented by a server running the appropriate software. Any such software is preferably stored on a non-transient computer readable medium.

The queue assigner 100 will now be described in more detail with reference to an implementation in which the queue assigner 100 serves as a queue broker for queue-based connections to and from base stations in an M2M network. This is just an example, and it should be understood that the devices and mechanisms described herein have general applicability to queuing in any network.

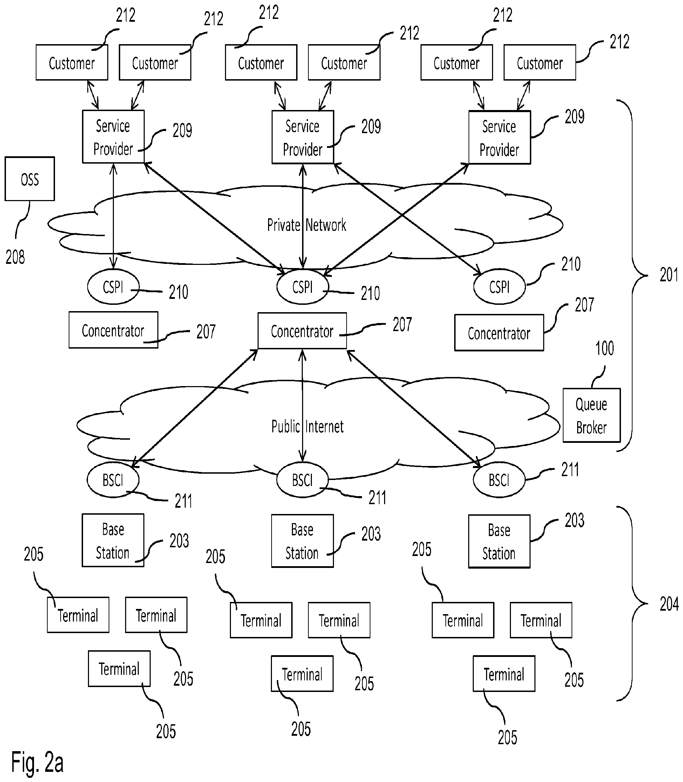

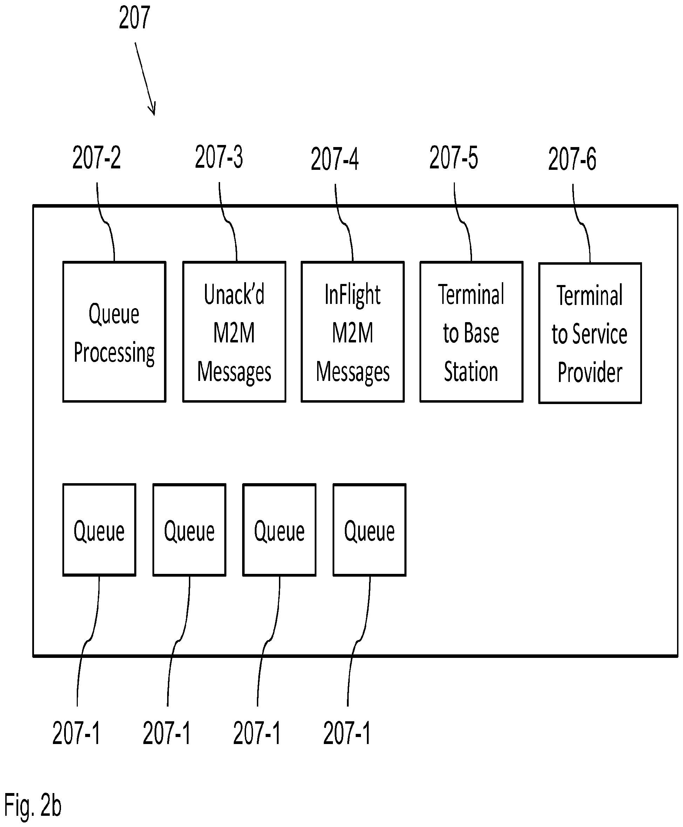

An example of an M2M implementation is shown in Figures 2a and b. In this example the communication network 201 may be the core network of the M2M network. The communication network 201 may comprise a plurality of entities. According to an embodiment the entities of the communication network 201 are service providers in a core network for further processing and/or reporting data received by the base stations to customers. The Operations Support Service (OSS) 208 may store information about each cell, such as which base stations and concentrators are serving that cell.

Communication units 203 form part of the bearer network, shown generally at 204. According to an embodiment a communication unit 203 can be a base station being suitably capable of communicating with many terminals 205 over the air interface. The base stations also transfer data received from the terminals 205 to the service network for further processing and/or reporting to customers 212. The base stations transfer this data by joining a message queue 207-1 at a gateway entity 207. In Figure 2a these gateway entities 207 are concentrators.

In the example of the M2M network, the queue broker is a service outside the base station for determining which message queue(s) 207-1 a base station should join. The queue broker serves requests from base stations when they need to communicate data to the core network. The queue broker may inform the OSS 208 of which base stations are connected to which concentrator to assist with network performance monitoring.

The message queues 207-1 are provided by gateway entities 207. In the example of an M2M network in Figure 2a the gateway interfaces 207 are concentrators. Each concentrator is preferably capable of supporting multiple base stations (e.g. around 50). The concentrator handles upstream messages for the base stations by forwarding them to the correct service provider. In most cases the correct service provider will be associated with the terminal from which the message originated. The concentrator also handles downstream messages from the service providers for the base stations. The concentrator thus supports a base station to concentrator interface (BSCI 211) at its lower edge and a concentrator to service provider interface (CSPI 210) at its upper edge. The concentrator provides an endpoint through which base stations can be queried by the service network, enabling the base stations themselves to exist behind a network address translator (NAT) and/or firewall.

An embodiment of a gateway entity 207 acting as a concentrator in a M2M network is shown in greater detail in Figure 2b. The block diagram in Figure 2b shows components and functions of the gateway entity 207, such as the message queues 207-1, the queue processing 207-2, unack'd M2M messages 207-3, InFlight M2M messages 207-4, terminal to base station communication 207-5, and terminal to service provider communication 207-6.

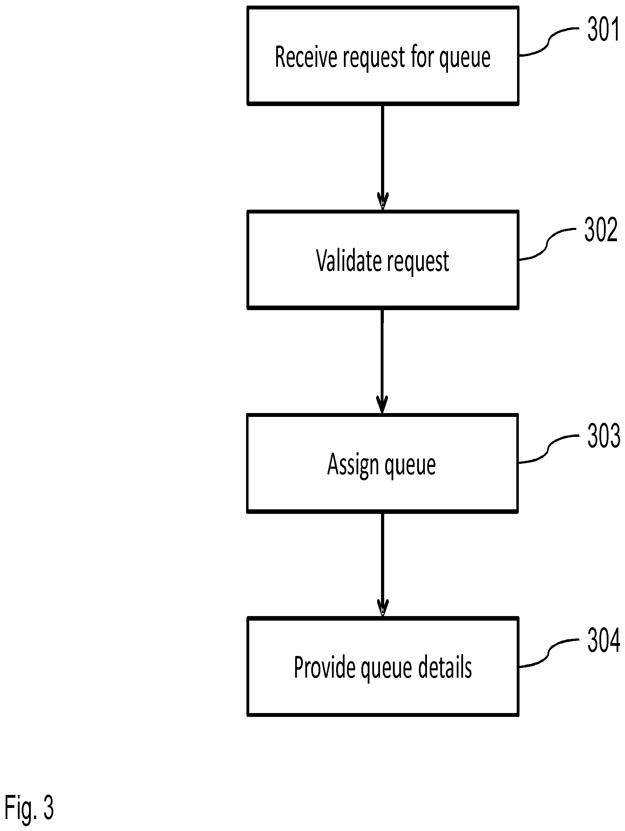

An overview of a method for allocating a base station to a particular message queue 207-1 is shown in Figure 3. The method is described below with specific reference to an M2M network but this is for the purposes of example only. The method has general applicability and is not limited to implementations in which the client device is a specifically a base station or the queue assigner is specifically an M2M queue broker.

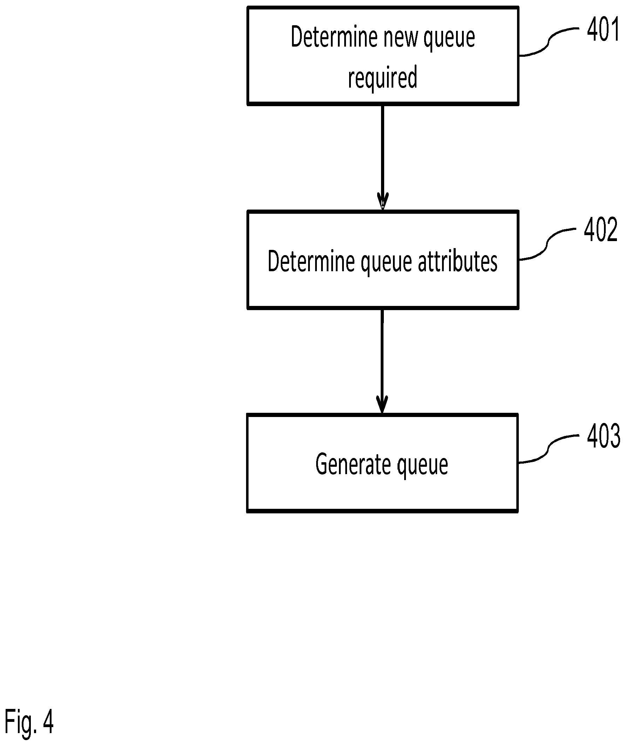

The queue assigner 100 is the first point of contact for the communication unit 203. In the example of an M2M network the queue assigner 100 is a queue broker and the communication unit 203 is a base station. The queue broker receives a request from the base station to join a message queue (step 301). In response the queue broker may validate the base station's identity (step 302). This might be achieved using cryptographic certificates or performing a look-up on whitelists. The queue broker then assigns the base station to an appropriate message queue (step 303) and provides details about the message queue (step 304) to the base station. The queue broker may assign the base station a message queue 207-1 from the existing pool of queues or may even instantiate a new message queue to meet the base station's requirements. The initialization of a new message queue 207-1 is shown in Figure 4. The queue broker first determines that a new message queue is required (step 401), than it determines the queue attributes (step 402), and finally generates the queue (step 403).

The queue assigner preferably knows the identities and capabilities of the existing gateway entities. The queue broker might have this information stored in its own memory or may query another network entity to obtain it. The queue broker is suitably capable of providing connections to different types of concentrator. The queue broker is thus able to provide each base station with the type of concentrator that it needs. The decision about which concentrator is appropriate for a particular base station might be based, for example, on a version of software that is supported by the base station. The decision might also be based on the service providers that that base station is likely to need, and whether one of the concentrators is already connected to those service providers or is serving one or more base stations that often need to be connected to those service providers. The decision might be based on the base station's geographical location. Often base stations in a similar geographical location may have similar requirements in terms of the qualities they need in a concentrator, the service providers they need o forward data to etc. The base station might also have other requirements that should preferably be met by its concentrator.

The queue broker may determine the appropriate concentrator for a particular base station based on requirements declared to (or obtained by) the queue broker when the base station sends its request. It might be that the base station incorporates additional information in its initial request to allow the queue broker to allocate an appropriate concentrator. The queue broker might query the base station for this information. Or it might be that the information on the base station is stored in some repository, and the queue broker retrieves information from that repository based on the base station's ID. In this example little more than the base station ID (and certificate) might be sent in the initial request to the queue broker.

The queue broker may consider the existing load on the concentrators when deciding where to allocate a base station. The queue broker may query the concentrators to determine which can take the load of servicing the base station.

The queue broker may allocate a base station to more than one message queue 207-1. The specifics of the queue-driven transport may necessitate a base station subscribing to several message queue 207-1. A particular example of this is allocating a base station to one queue for upstream messages and one queue for downstream. Similarly the queue broker may allocate one or more base stations to an individual message queue 207-1.

In response to a validated request from an M2M base station, the queue broker will return details for a message queue(s) appropriate to that base station (step 304). These details suitably assist the base station to connect to the concentrator and might include, for example:
- The address of the concentrator
- The message queue on that concentrator to which the base station has been assigned
- Security credentials for accessing that message queue
- Parameters for subscribing to the message queue
- The protocol used by the concentrator to communicate with base stations
- The correct message format to use when communicating with the concentrator
- Properties with which messages posted to the queue should be adorned

The queue broker acts not only as an agent for the concentrators; it also commissions the creation of concentrators and their message queues 207-1. An example of a method of creating a message queue 207-1 is shown in Figure 4. As with Figure 3, the method is described with specific reference to an M2M network but this is for the purposes of example only. The method has general applicability and is not limited to implementations in which the client device is a specifically a base station or the queue assigner is specifically an M2M queue broker.

The queue broker may determine that a new message queue is required (step 401). This determination might be triggered by a number of different circumstances. It might be triggered by a request from a base station, particularly if that request is one that the queue broker cannot meet. For example, all the existing message queues 207-1 might be overloaded or there might be no message queues 207-1 available at concentrators that meet the requesting base station's requirements. It might be triggered by the allocation of a message queue 207-1 to a base station, since this would reduce the number of message queues 207-1 available for future requests. The queue broker may also be generally configured to pre-emptively initiate creation of additional message queues 207-1, so that there are queues available in time for future connections. The queue broker may attempt to predict the future need for message queues 207-1 based on factors such as the current loading on the concentrators, the rate at which it is receiving queue requests from the base stations, the number of message queues 207-1 that it is servicing, the number of queues that each base station is on average requiring, the rate at which messages queue 207-1 are being released by base stations etc.

The queue broker determines whether there are any specific requirements for the new queue (step 402). These requirements may be specified by the circumstances that caused a new message queue 207-1 to be needed. For example, if a new message queue 207-1 is needed because the queue broker could not meet a request from a base station, the new message queue 207-1 suitably has the properties that that base station requires. If the new message queue 207-1 is triggered by the allocation of an existing message queue 207-1, the queue broker may determine that the new message queue 207-1 should have the same or similar properties as the allocated message queue 207-1 so that its "stock" of that particular queue type is undiminished. The queue broker might also predict what queue type it might require on the future based, for example, on the number of message queues 207-1 of a particular type it already has available and the frequency with which the base stations are requesting a particular type of message queue 207-1.

In step 403 the queue broker causes the new message queue to be created. The queue broker may cause the new message queue 207-1 to be associated with an existing concentrator. The queue broker might also cause a new concentrator, having particular properties, to be created to support the new message queue 207-1. The queue broker may cause further entities to be created in response to a new message queue 207-1 being initiated or bound to. Examples include processors for the other end of the message queue 207-1, or monitoring systems to ensure the health of the message queue 207-1 or its endpoint processors. Having initiated the queue the queue broker may pass back the name of that freshly-created message queue 207-1 to one or more base stations.

The queue assigner described herein has a number of advantages over existing methods. Firstly it combines authentication, queue creation, and gateway entity creation in one automated system. It further decouples these functions from the client of the message queue 207-1 and the queue-based system. It also has a simple interface for the client's perspective: the client merely supplies credentials and, in return, gets parameters for the message queue 207-1. In other systems a rich interaction would typically be required to get credentials, invoke the message queue 207-1, create processors, and balance loads. The queue assigner described herein provides a simple interface through which highly-scalable, queue-based services can be achieved.

A second advantage of the queue assigner 100 described herein is that it handles the scalability of the queue system, including the gateway entities 207 (e.g. the concentrators), independently of any limitations imposed by the underlying queue technology. Alternative solutions might involve pre-assigning message queues 207-1, having the mapping from clients to message queues 207-1 within the client's logic, or invoking message queues 207-1 directly from the client. None of these is straightforwardly scalable. The queue assigner 100 described herein provides a mechanism by which message queues 207-1 and their associated gateway entities 207 can work and scale together.

The concentrator in the examples above is an example of a gateway entity 207: an entity that is capable of supporting multiple client devices. Gateway entities 207 may be scaled out to handle an increasing number of client devices 203, either by each gateway entity 207 handling increasing number of message queues 207-1 or by the queue assigner 100 creating more instances of a gateway entity 207. The Gateway entities 207 are thus ideally suited for M2M networks since they can be scaled out with an increasing number of base stations, terminals and/or traffic levels.

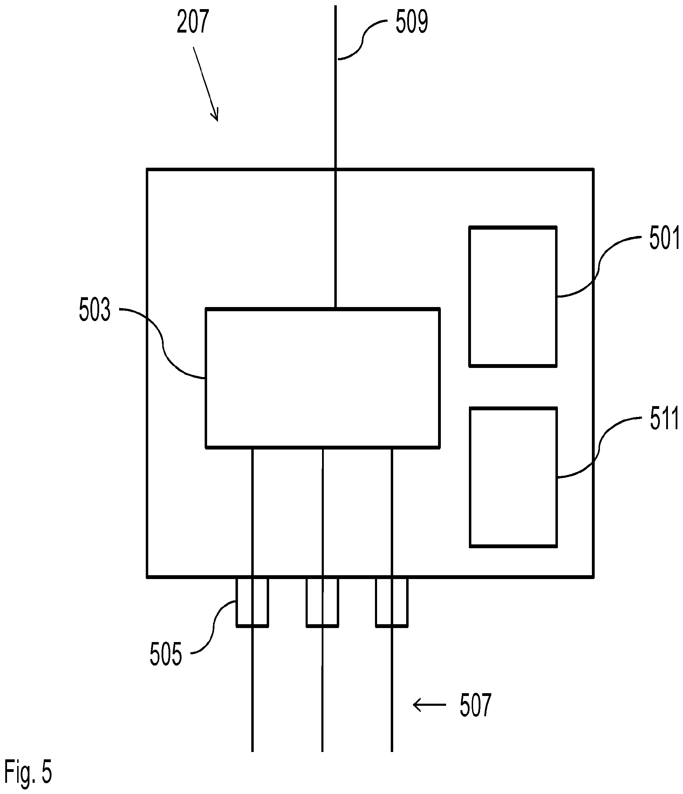

An example of a gateway entity 207 is shown in Figure 5. The gateway entity 207 is configured to provide an interface between a client device 203 and a communication network 201. For the client devices 203, it provides a gateway to the communication network 201. For the communication network 201, it provides an end point through which the client devices 203 can be queried.

The gateway entity 207 comprises at least one port 505 configured to receive data from the client device 203. Each port 505 preferably supports a message queue 207-1. In one example, the ports may be implemented as TCP sockets. Having the gateway entity present connectable ports 505 also enables the client devices 203 to exist behind firewalls. The gateway entity 207 handles upstream messages from the client devices and forwards them to the appropriate entity in the communication network 209, for instance a service provider. The correct service provider may be associated with a device on behalf of which the client device 203 forwarded the message to the gateway entity 207 (e.g. a communication terminal).

The gateway entity 207 also comprises one or more outputs via which the gateway entity can route data to one or more entities in the communication network 201. The gateway entity 207 also handles downstream messages for the client devices 203. The gateway entity 207 may be configured to assume that the client device 203 will be slow to respond. The communication unit 203 is preferably configured to queue messages for the client device 203, send those messages to the client device 203 and retry if the client device does not respond with an acknowledgement.

The gateway entity 206 comprises a communication interface 503 and a processor 501. The processor 501 is configured to establish a first secure connection 507 with a client device 203 and a second secure connection 505 with one or more entities in the communication network 201 via the communication interface 503. The communication interface 503 is also configured to receive data for the entities in the communication network 201 over the secure connection with the client device 203 and transmit that data over the secure connection with the entities in the communication network 201 (and vice versa). The processor 501 may be configured to look-up the correct entity in the communication network 209, e.g. by querying a location service in the communication network. The look-up could be based on an identity of the client device 203 or a terminal that sent the data to the client device. Furthermore, the processor 501 may be configured to determine when the gateway entity 207 is getting overloaded and when it should try to offload one or more client devices onto another gateway entity 207.

The gateway entity 207 further comprises a memory 511 for storing information about the connections with client devices 203. This information might include a record of data it has communicated with a particular client device 203. The gateway entity 207 might also be configured to store the addresses of entities in the communication network 201 for which a particular client device 203 has previously transmitted data to the gateway entity 207. It might also store the identities of communication terminals on behalf of which a particular client device 203 has transmitted the data to a particular entity in the communication network 209. So, for example, when the gateway entity 207 is acting as a concentrator in an M2M network, it may have a cached list of all the terminals that are attached to its base stations.

Finally the processor of the gateway entity 501 may assists the gateway entity 207 in the event of it losing state by recovering that state from records stored on one or more of the client devices 203. The recovery unit may also obtain information about its state from records stored on the OSS 208, which it may obtain directly or via a queue assigner.

The gateway entity 207 is likely to be implemented in a combination of hardware and software, although the scope of this document is not limited to any specific type of implementation. The processor 501 may in some implementations form part of a distributed computing network (i.e. it may be implemented by the cloud). It may be implemented by a server running the appropriate software. Any such software is preferably stored on a non-transient computer readable medium, such as a memory (RAM, cache, hard disk etc) or other storage means (USB stick, CD, FLASH, ROM, disk etc).

One advantage of a gateway entity 207 such as that shown in Figure 5 is that it can be configured to provide routing between the client devices 203 and other entities in the network. This advantage, and other advantages of the gateway entity 207, will now be described with reference to a particular example in which the gateway entity 207 is a concentrator in an M2M network. As with the examples described above, this should not be taken as limiting. The gateway entity 207 may be advantageously implemented in any network in accordance with the methods and principles described herein and is not limited to M2M networks or to routing data to and from base stations.

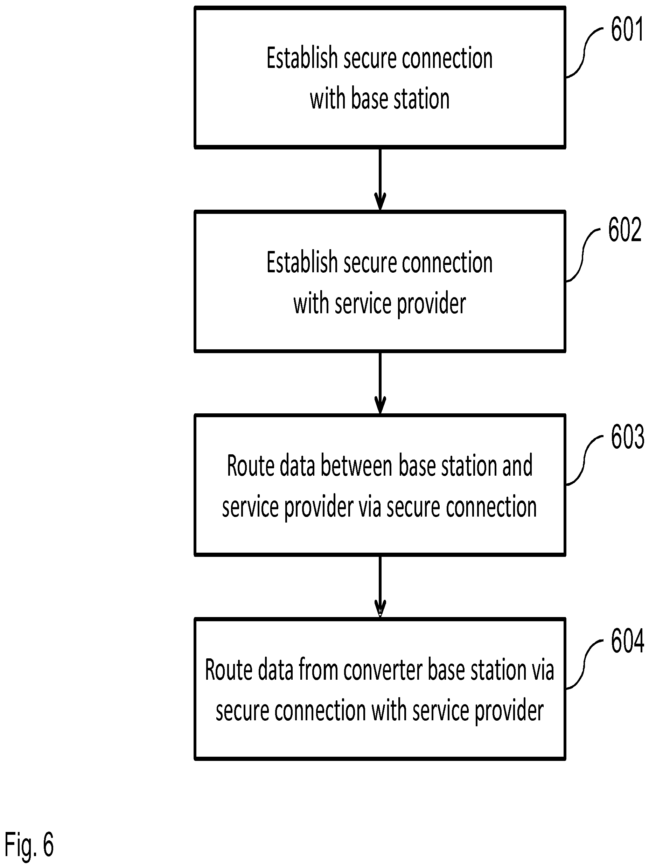

The concentrators will typically have more computing power than the base stations. Thus they are more suited to implementing the encryption required to support many secure connections to other entities in the network. An example of a mechanism for establishing secure communications channels is shown in Figure 6. The method commences with the concentrator establishing a secure connection with a base station (step 601). The concentrator is preferably configured to communicate with the base stations using a simple, secure protocol. One possibility is for communications between the concentrator and the base station to be tunnelled over IPSEC. The concentrator then establishes secure connections with one or more service providers that the base station wishes to communicate with (step 602). These are preferably secure connections, which may be similar to the secure connections the concentrator establishes with its base stations or they may have enhanced or different security compared to the base station connections. The concentrator may tailor the connections to the particular requirements of the service provider, which may vary from one provider to another. The concentrator uses the secure connections to route data between the base station and the service provider (step 603). Finally the concentrator may use the connection with a service provider, which it initially established on behalf of one base station, to transfer data on behalf of another base station (step 604).

By having the concentrator provide secure connections with the service providers on behalf of the base stations, the number of secure connections needed from each base station is reduced. The number of connections required within the network as a whole is also reduced, especially since concentrators can use one connection with a service provider to transfer data on behalf of many base stations. Thus by scaling out the concentrators with the number of base stations, it becomes possible to divide-and-conquer the number of connections required within the network. This is especially advantageous for growing M2M networks.

Use of a concentrator not only results in fewer connections having to be established in the network. A concentrator may be configured to cache connections to the other entities in the network and thus fewer link establishment events are also required. The queue broker may be configured to assign a base station to a particular concentrator on the basis of connections that that concentrator has with particular service providers
The concentrator preferably has the capability to offload base stations when needed. This might occur, for example, when the concentrator needs to have scheduled down-time or is becoming overloaded. The concentrator may be configured to send a message to one or more base stations that triggers those devices to re-query the queue broker and jump to a different message queue 207-1. The concentrator may also inform the queue broker of its need to offload some or all of its base stations so that the queue broker does not just reallocate those devices back to the same processor.

If a base station loses connectivity with its concentrator, e.g. when the concentrator becomes unavailable or unresponsive, it preferably re-queries the queue broker. The base station suitably informs the queue broker that its own state is intact so that the queue broker is aware that the base station is not contacting it due to any failure or loss of state on its own part. The queue broker suitably can designates a concentrator for the base station and informs that processor that it should treat the base station as having the best knowledge of its own state.

Another advantage of the concentrator described herein is that the base station's state is effectively stored in two locations: the base station and the concentrator. Thus a loss of state by the concentrator can be recovered from its base stations and a loss of state by a base station can be recovered from its concentrator.

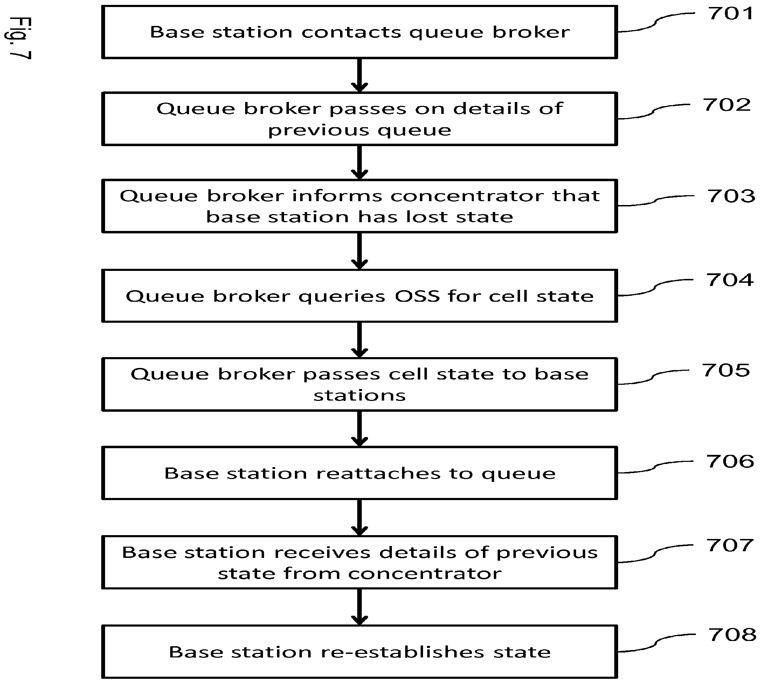

An example of a base station reinitializing its state is shown in Figure 7. The base station, realizing that it has lost state, contacts the queue broker (step 701). The queue broker passes the base station details of the message queue 207-1that it was previously assigned to (step 702). The queue broker suitably informs the concentrator that in this instance the base station has lost state (step 703). The queue broker might also query an OSS in the service network for details of the cell state (step 704). These details are also passed to the base station (step 705). The base station then reattaches to its message queue (step 706), and receives details of its previous state from the concentrator (step 707). These details suitably include records of what the concentrator had communicated with the base station before its loss of state. The base station uses the information about its own and its cell's state to re-establish its own state (step 708).

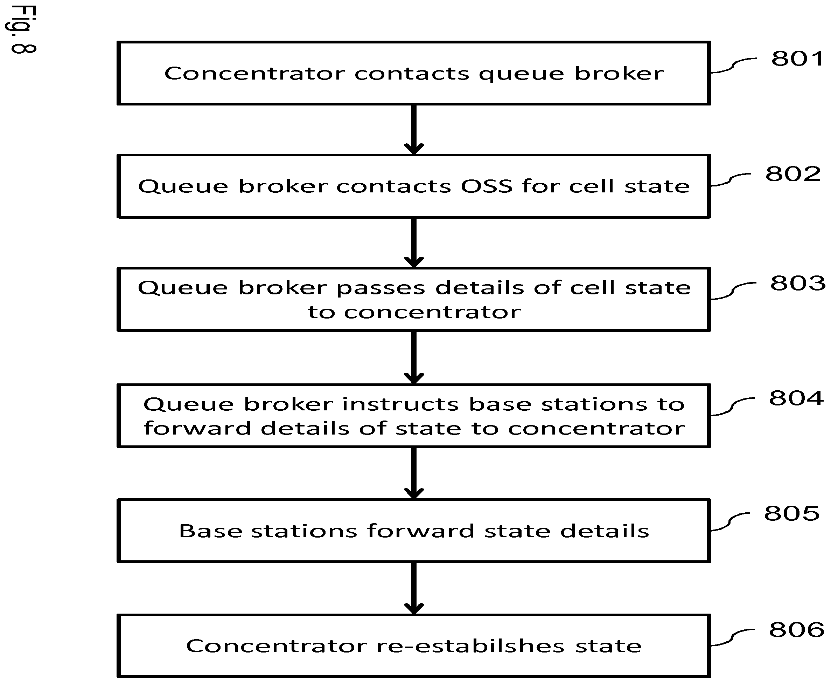

An example of a concentrator reinitializing its state is shown in Figure 8. The concentrator, realizing that it has lost state, contacts the queue broker (step 801). The queue broker queries an OSS 208 in the service network for the states of the cells that the concentrator's base stations are operational in (step 802). Alternatively the concentrator may query the OSS itself. The queue broker passes these details to the concentrator (step 803). It also contacts the base stations that are assigned to the concentrator and instructs them to forward information about their current state to the concentrator (step 804). This information may be transferred as part of an attach process as the base stations reattach to the concentrator. Alternatively the queue broker could give the concentrator the identities of the appropriate base stations and leave it to obtain the required information from the base stations. This information suitably includes records of what the base stations had communicated with the concentrator before its loss of state. The base stations forward the information as instructed (step 805) and the concentrator uses the information about its client's and their cell's state to re-establish its own state (step 806).

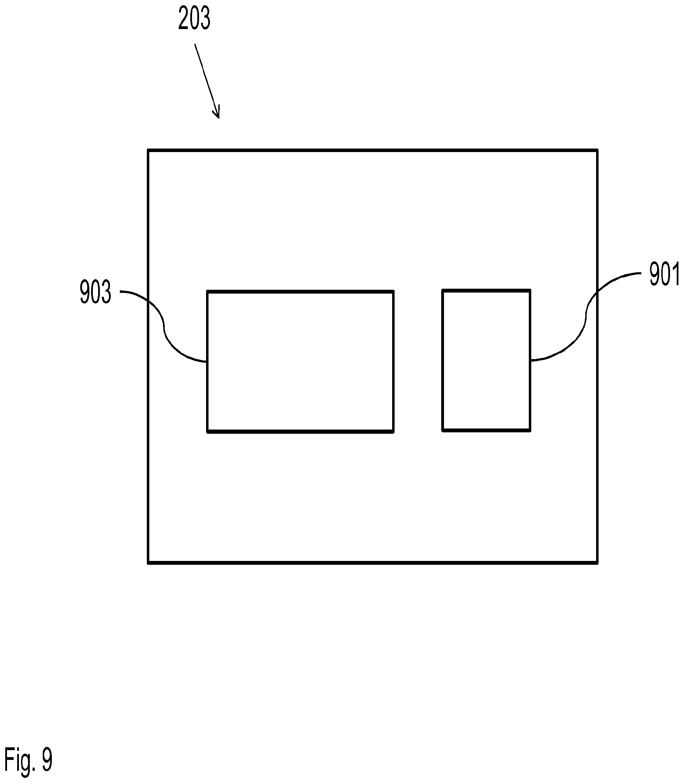

An example of a communication unit 203 is shown in Figure 9. Such a communication unit 203 can for instance be a base station (although it might equally be a communication unit having any other role in a wireless network). The communication unit 203 comprises communication interface 903 configured to receive data over a wireless network and to transmit that data to a gateway between the wireless network and a communication network. The communication unit 203 also comprises a processor 901 configured to request from the gateway a record of what it has previously transmitted to the gateway in the event of the communication unit 203 suffering a loss of state.

Other approaches to the dynamic construction of the gateway entities could include using a cluster of gateway entities, with some sort of load balancing, and some auto-scaling. These options all have disadvantages compared to the system described herein. A clustered approach, for example, would involve a separate load balancer, which could either introduce a separate point of failure, or present poorer performance as state gets transferred between load balancer instances. Also any state replication that occurs between the gateway entities would be hidden from the client devices, and possibly unexpected. This could cause intermittent degradation of performance of the gateway entities from the point of view of the client device.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A queue assigner (100) for assigning a client device, in particular a base station (203), to message queues (207-1) for exchanging communication data between the client device (203) and a communication network (201) via a plurality of gateways, wherein the each gateway is associated with at least one message queue (207-1) for transferring the communication data, the queue assigner (100) comprising:
a processor (101) configured for
assigning the client device (203) to an existing message queue (207-1), wherein the message queue is associated with at least one gateway selected from the plurality of gateways; in particular determining that a new message queue (207-1) is required if the client device (203) cannot be assigned to the existing message queues (207-1);
causing a creation of the new message queue (207-1), in particular responsive to that determination, if the client device (203) cannot be assigned to the existing message queues (207-1); and
assigning the client device (203) to the new message queue (207-1) for transmitting communication data;
wherein the processor (101) is configured for assigning the client device (203) to the existing message queue (207-1) according to a communication parameter relating to the gateway, to the client device (203), and/or to the communication network (201),
the processor (101) being configured for validating the identity of the client device (203) before assigning the client device (203) to the existing message queue (207-1).

2. The queue assigner (100) as claimed in any preceding claim, the processor (101) being configured for assigning the client device (203) to more than one existing message queues (207-1).

3. The queue assigner (100) as claimed in any preceding claim, the processor (101) being configured for providing the client device (203) information to identify and/or join the existing message queue (207-1).

4. The queue assigner (100) as claimed in any preceding claim, the processor being configured for monitoring a load of at least one of the existing message queues (207-1) associated with the at least one gateway.

5. The queue assigner (100) as claimed in any preceding claim, the processor (101) being configured for creating the new message queue (207-1) in response to a request from the client device (203), or in response to the processor (101) assigning the respective existing message queue (207-1) to a client device, or in dependence of a load of the existing message queue (207-1).

6. The queue assigner (100) as claimed in any preceding claim, the processor (101) being configured for reassigning the client device (203), in particular which is determined to have lost its connection with a gateway without losing its state, to an existing message queue (207-1) associated with a different gateway, wherein the state of the client device comprises records of previous communication between the client device (203) and the gateway (207).

7. The queue assigner (100) as claimed in any preceding claim, the processor (101) being configured for retrieving a state associated with the client device from a support system (208) in the communication network, in particular an OSS, in particular if the processor has determined that a client device has suffered a loss of state, wherein the state of the client device comprises records of previous communication between the client device (203) and the gateway (207).

8. The queue assigner (100) as claimed in any preceding claim, the processor (101) being configured for assigning the client device (203) to an existing message queue (207-1) at the gateway to which the client device was allocated prior to its loss of state, in particular if the processor has been determined that a client device (203) has suffered a loss of state, wherein the state of the client device comprises records of previous communication between the client device (203) and the gateway (207).

9. A method for assigning a client device (203) to message queues (207-1) for exchanging communication data between the client device (203) and a communication network (201) via a plurality of gateways, wherein each gateway is associated with at least one message queue (207-1) for transferring the communication data, the method comprising:
assigning the client device (203) to an existing message queue (207-1) associated with at least one gateway selected from the plurality of gateways,
in particular determining that a new message queue (207-1) is required if the client device (205) cannot be assigned to the existing message queues (207-1),
creating the new message queue (207-1) in particular responsive to that determination, if the client device (203) cannot be assigned to the existing message queues (207-1), and
assigning the client device to the new message queue (207-1) for transmitting communication data;
wherein the assigning the client device (203) to the existing message queue (207-1) is performed according to a communication parameter relating to the gateway, to the client device (203), and/or to the communication network (201),
the method further comprising validating the identity of the client device (203) before assigning the client device (203) to the existing message queue (207-1).

## Patentansprüche

1. Warteschlangenzuweiser (100) zum Zuweisen eines Client-Geräts, insbesondere einer Basisstation (203), zu Nachrichten-Warteschlangen (207-1) zum Austauschen von Kommunikationsdaten zwischen dem Client-Gerät (203) und einem Kommunikationsnetzwerk (201) über eine Vielzahl von Gateways, wobei jedem Gateway mindestens eine Nachrichten-Warteschlange (207-1) zum Übertragen der Kommunikationsdaten zugeordnet ist, wobei der Warteschlangenzuweiser (100) Folgendes umfasst:
einen Prozessor (101), der dafür konfiguriert ist, das Client-Gerät (203) einer bestehenden Nachrichten-Warteschlange (207-1) zuzuweisen, wobei die Nachrichten-Warteschlange mit mindestens einem aus der Vielzahl von Gateways ausgewählten Gateway verbunden ist;
insbesondere das Bestimmen, dass eine neue Nachrichten-Warteschlange (207-1) erforderlich ist, wenn das Client-Gerät (203) den vorhandenen Nachrichten-Warteschlangen (207-1) nicht zugeordnet werden kann;
Veranlassen einer Erstellung der neuen Nachrichten-Warteschlange (207-1), insbesondere als Reaktion auf diese Bestimmung, wenn das Client-Gerät (203) den vorhandenen Nachrichten-Warteschlangen (207-1) nicht zugeordnet werden kann; und
Zuweisen des Client-Geräts (203) zur neuen Nachrichten-Warteschlange (207-1) für die Übertragung von Kommunikationsdaten;
wobei der Prozessor (101) dafür konfiguriert ist, das Client-Gerät (203) der vorhandenen Nachrichten-Warteschlange (207-1) gemäß einem Kommunikationsparameter, der sich auf das Gateway, das Client-Gerät (203) und/oder das Kommunikationsnetz (201) bezieht, zuzuweisen, wobei der Prozessor (101) dafür konfiguriert ist, die Identität des Client-Geräts (203) zu überprüfen, bevor er das Client-Gerät (203) der vorhandenen Nachrichten-Warteschlange (207-1) zuweist.

2. Warteschlangenzuweiser (100) nach einem beliebigen vorhergehenden Anspruch, wobei der Prozessor (101) für das Zuweisen des Client-Geräts (203) zu mehr als einer vorhandenen Nachrichten-Warteschlange (207-1) konfiguriert ist.

3. Warteschlangenzuweiser (100) nach einem beliebigen vorhergehenden Anspruch, wobei der Prozessor (101) dafür konfiguriert ist, dem Client-Gerät (203) Informationen zu liefern, um die vorhandene Nachrichten-Warteschlange (207-1) zu identifizieren und/oder sich ihr anzuschließen.

4. Warteschlangenzuweiser (100) nach einem beliebigen vorhergehenden Anspruch, wobei der Prozessor dafür konfiguriert ist, eine Auslastung mindestens einer der vorhandenen Nachrichten-Warteschlangen (207-1) zu überwachen, die mit mindestens einem Gateway verbunden sind.

5. Warteschlangenzuweiser (100) nach einem beliebigen vorhergehenden Anspruch, wobei der Prozessor (101) dafür konfiguriert ist, die neue Nachrichten-Warteschlange (207-1) als Reaktion auf eine Anforderung von dem Client-Gerät (203) oder als Reaktion auf die Zuweisung der jeweils vorhandenen Nachrichten-Warteschlange (207-1) durch den Prozessor (101) an ein Client-Gerät oder je nach Auslastung der vorhandenen Nachrichten-Warteschlange (207-1) zu erstellen.

6. Warteschlangenzuweiser (100) nach einem beliebigen vorhergehenden Anspruch, wobei der Prozessor (101) dafür konfiguriert ist, das Client-Gerät (203) neu zuzuweisen, insbesondere wenn festgestellt wird, dass es seine Verbindung mit einem Gateway verloren hat, ohne seinen Status zu verlieren, zu einer bestehenden Nachrichten-Warteschlange (207-1), die einem anderen Gateway zugeordnet ist, wobei der Status des Client-Geräts Aufzeichnungen über die vorherige Kommunikation zwischen dem Client-Gerät (203) und dem Gateway (207) umfasst.

7. Warteschlangenzuweiser (100) nach einem beliebigen vorhergehenden Anspruch, wobei der Prozessor (101) für das Abrufen eines dem Client-Gerät zugeordneten Status von einem Support-System (208) in dem Kommunikationsnetzwerk, insbesondere einem OSS, konfiguriert ist, insbesondere wenn der Prozessor festgestellt hat, dass ein Client-Gerät einen Statusverlust erfahren hat, wobei der Status des Client-Geräts Aufzeichnungen über die vorherige Kommunikation zwischen dem Client-Gerät (203) und dem Gateway (207) umfasst.

8. Warteschlangenzuweiser (100) nach einem beliebigen vorhergehenden Anspruch, wobei der Prozessor (101) für die Zuweisung des Client-Gerätes (203) zu einer bestehenden Nachrichten-Warteschlange (207-1) an dem Gateway konfiguriert ist, dem das Client-Gerät vor seinem Statusverlust zugewiesen wurde, insbesondere wenn der Prozessor festgestellt hat, dass ein Client-Gerät (203) einen Statusverlust erfahren hat, wobei der Status des Client-Gerätes Aufzeichnungen über die vorherige Kommunikation zwischen dem Client-Gerät (203) und dem Gateway (207) umfasst.

9. Verfahren zum Zuweisen eines Client-Geräts (203) zu Nachrichten-Warteschlangen (207-1) zum Austauschen von Kommunikationsdaten zwischen dem Client-Gerät (203) und einem Kommunikationsnetzwerk (201) über eine Vielzahl von Gateways, wobei jedes Gateway mindestens einer Nachrichten-Warteschlange (207-1) zum Übertragen der Kommunikationsdaten zugeordnet ist, wobei das Verfahren Folgendes umfasst:
Zuweisen des Client-Geräts (203) zu einer bestehenden Nachrichten-Warteschlange (207-1), die mindestens einem aus der Vielzahl von Gateways ausgewählten Gateway zugeordnet ist, wobei insbesondere bestimmt wird, dass eine neue Nachrichten-Warteschlange (207-1) erforderlich ist, wenn das Client-Gerät (205) nicht den bestehenden Nachrichten-Warteschlangen (207-1) zugewiesen werden kann, Erstellen der neuen Nachrichten-Warteschlange (207-1), insbesondere als Reaktion auf diese Bestimmung, wenn das Client-Gerät (203) nicht den bestehenden Nachrichten-Warteschlangen (207-1) zugeordnet werden kann, und Zuordnen des Client-Geräts zu der neuen Nachrichten-Warteschlange (207-1) zum Übertragen von Kommunikationsdaten;
wobei das Zuweisen des Client-Geräts (203) zu der vorhandenen Nachrichten-Warteschlange (207-1) gemäß einem Kommunikationsparameter durchgeführt wird, der sich auf das Gateway, das Client-Gerät (203) und/oder das Kommunikationsnetzwerk (201) bezieht, wobei das Verfahren ferner die Validierung der Identität des Client-Geräts (203) vor dem Zuweisen des Client-Geräts (203) zu der vorhandenen Nachrichten-Warteschlange (207-1) umfasst.

## Revendications

1. Dispositif d'attribution de file d'attente (100) destiné à attribuer un dispositif client, en particulier une station de base (203), à des files d'attente de messages (207-1) afin d'échanger des données de communication entre le dispositif client (203) et un réseau de communication (201) par l'intermédiaire d'une pluralité de passerelles, chaque passerelle étant associée à au moins une file d'attente de messages (207-1) pour le transfert des données de communication, le dispositif d'attribution de file d'attente (100) comprenant :
un processeur (101) conçu pour attribuer le dispositif client (203) à une file d'attente de messages (207-1) existante, la file d'attente de messages étant associée à au moins une passerelle choisie dans la pluralité de passerelles ;
déterminer en particulier qu'une nouvelle file d'attente de messages (207-1) est requise si le dispositif client (203) ne peut pas être attribué aux files d'attente de messages (207-1) existantes ;
entraîner la création de la nouvelle file d'attente de messages (207-1), en particulier en réponse à la détermination consistant à savoir si le dispositif client (203) ne peut pas être attribué aux files d'attente de messages (207-1) existantes ; et pour
attribuer le dispositif client (203) à la nouvelle file d'attente de messages (207-1) pour transmettre des données de communication ;
le processeur (101) étant conçu pour attribuer le dispositif client (203) à la file d'attente de messages (207-1) existante selon un paramètre de communication relatif à la passerelle, au dispositif client (203) et/ou au réseau de communication (201), le processeur (101) étant conçu pour valider l'identité du dispositif client (203) avant l'attribution du dispositif client (203) à la file d'attente de messages (207-1) existante.

2. Dispositif d'attribution de file d'attente (100) selon l'une des revendications précédentes, le processeur (101) étant conçu pour attribuer le dispositif client (203) à plusieurs files d'attente de messages (207-1) existantes.

3. Dispositif d'attribution de file d'attente (100) selon l'une des revendications précédentes, le processeur (101) étant conçu pour fournir au dispositif client (203) des informations pour identifier et/ou rejoindre la file d'attente de messages (207-1) existante.

4. Dispositif d'attribution de file d'attente (100) selon l'une des revendications précédentes, le processeur étant conçu pour surveiller une charge d'au moins l'une des files d'attente de messages (207-1) existantes associée à l'au moins une passerelle.

5. Dispositif d'attribution de file d'attente (100) selon l'une des revendications précédentes, le processeur (101) étant conçu pour créer la nouvelle file d'attente de messages (207-1) en réponse à une demande provenant du dispositif client (203), ou en réponse à l'attribution par le processeur (101) de la file d'attente de messages (207-1) existante respective à un dispositif client, ou en fonction d'une charge de la file d'attente de messages (207-1) existante.

6. Dispositif d'attribution de file d'attente (100) selon l'une des revendications précédentes, le processeur (101) étant conçu pour réattribuer le dispositif client (203), lequel est en particulier déterminé comme ayant perdu sa connexion avec une passerelle sans perdre son état, à une file d'attente de messages (207-1) existante associée à une passerelle différente, l'état du dispositif client comprenant des enregistrements de communication précédente entre le dispositif client (203) et la passerelle (207).

7. Dispositif d'attribution de file d'attente (100) selon l'une des revendications précédentes, le processeur (101) étant conçu pour récupérer un état associé au dispositif client à partir d'un système de support (208) dans le réseau de communication, en particulier un logiciel libre, en particulier si le processeur a déterminé qu'un dispositif client a subi une perte d'état, l'état du dispositif client comprenant des enregistrements de communication précédente entre le dispositif client (203) et la passerelle (207).

8. Dispositif d'attribution de file d'attente (100) selon l'une des revendications précédentes, le processeur (101) étant conçu pour attribuer le dispositif client (203) à une file d'attente de messages (207-1) existante au niveau de la passerelle à laquelle le dispositif client était attribuée avant sa perte d'état, en particulier si le processeur a déterminé qu'un dispositif client (203) a subi une perte d'état, l'état du dispositif client comprenant des enregistrements de communication précédente entre le dispositif client (203) et la passerelle (207).

9. Procédé d'attribution d'un dispositif client (203) à des files d'attente de messages (207-1) afin d'échanger des données de communication entre le dispositif client (203) et un réseau de communication (201) par l'intermédiaire d'une pluralité de passerelles, chaque passerelle étant associée à au moins une file d'attente de messages (207-1) pour le transfert des données de communication, le procédé consistant à :
attribuer le dispositif client (203) à une file d'attente de messages (207-1) existante associée à au moins une passerelle choisie dans la pluralité de passerelles, en particulier à déterminer qu'une nouvelle file d'attente de messages (207-1) est requise si le dispositif client (205) ne peut pas être attribué aux files d'attente de messages (207-1) existantes, créer la nouvelle file d'attente de messages (207-1), en particulier en réponse à la détermination consistant à savoir si le dispositif client (203) ne peut pas être attribué aux files d'attente de messages (207-1) existantes, et à attribuer le dispositif client à la nouvelle file d'attente de messages (207-1) pour la transmission de données de communication ;
l'attribution du dispositif client (203) à la file d'attente de messages (207-1) existante étant effectuée selon un paramètre de communication relatif à la passerelle, au dispositif client (203) et/ou au réseau de communication (201), le procédé consistant en outre à valider l'identité du dispositif client (203) avant l'attribution du dispositif client (203) à la file d'attente de messages (207-1) existante.
